# EUROPEAN PATENT SPECIFICATION

(11) **EP 1 624 400 B1**
(45) Date of publication and mention of the grant of the patent: **24.11.2010**
(21) Application number: 05380121.3
(22) Date of filing: 09.06.2005
(51) Int. Cl.: G06K 9/20, G06K 19/06, G06K 17/00

(54) **Pre-marked data recording form for opto-electronic reading**
Vormarkiertes Datenaufnahme-Formblatt zum optoelektronischen Lesen
Fiche d'enregistrement de données pré-marquée pour la lecture opto-électronique

(30) Priority: 02.08.2004 ES 200401916
(43) Date of publication of application: 08.02.2006
(73) Proprietor: Rodrigues Isidoro, José, Salamanca 37004 (ES)
(72) Inventor: Rodrigues Isidoro, José, Salamanca 37004 (ES)
(74) Representative: Temino Ceniceros, Ignacio

(56) References cited:
- EP-A- 0 471 257
- GB-A- 2 374 569
- US-A- 3 485 168

## Description

### OBJECT OF THE INVENTION

This invention is a form for recording data, which has been especially devised for use in systems such as multiple choice tests, examinations, medical reports, epidemiological tests and similar, the form constituting the printed base for a series of characters for identification purposes or of a different type, which are to be read with the aid of opto-electronic instruments, thereby automating the interpretation or reading of the contents of the form.

On the one hand, the aim of the invention is to make it easier for the user to use the form or to fill it in, and on the other hand, it is to ensure that the handwritten characters written on it are correctly recognised by the opto-electronic instruments, so that there are no errors in interpreting the contents, especially when those characters contain accents, dieresis, tildes or similar diacritic marks.

### BACKGROUND TO THE INVENTION

It is a well-known fact that the use of forms is widespread for multiple choice tests, examinations, medical reports, epidemiological tests and similar matters, as referred to above, and that these forms contain at least one part that has to be filled in by the interested party, including the person' first name, surname(s), national identity card number or passport number, so that each form can be associated with a particular person.

Instead of the classic procedure where people control these forms, there is a growing and increasingly widespread trend towards these forms being structured in such a way that they can be controlled or interpreted by opto-electronic devices. Examples can be in EP 0 471 257 and GB 2 374 569.

Although this solution satisfactorily fulfils the function for which it was devised when the characters concerned could be regarded as " normal", and the same applies to other techniques whose aim is to obtain similar results, certain problems do arise in identifying the reading when special characters are used, such as those which feature diacritic marks such as tildes, acute and grave accents, circumflexes, dieresis and the letter " ñ".

For these tildes the form, including the areas that have to be completed with the letters themselves, is filled in with a horizontal and upper dotted line, sometimes with the use of strokes and sometimes with dots, on occasions this is a double line, in such a way that this supplementary line lying above the letter itself, is the one that the person has to use to fill in the tildes.

This system causes a problem that is twofold in nature, because on the one hand it is very difficult for the persons who are using the forms to fill them in, when tildes have to be used, to the extent that the users avoid using them or use them incorrectly.

On the other hand, this incorrect usage gives rise to an erroneous interpretation by the opto-electronic instruments, to the extent that a decision is often taken not to include this type of supplementary zone for the tildes, in order to prevent such errors from being made.

Not only the omission but also the false interpretation by the opto-electronic instruments, have a considerable effect upon the identification, either because certain documents are incorrectly associated with a particular person with whom they are mismatched, or because of the incorrect filing of the data that are shown on the form.

It is clear that the aforementioned problem can occur if it is borne in mind that there are some people who have names that are identical except for the absence or presence of a diacritic mark such as a tilde, and all the more so at present, when the use of several languages is widespread as a result of the close relationships that exist between several different countries, which makes it necessary to make the data compiling resources take on a universal role.

### DESCRIPTION OF THE INVENTION

The form that is proposed in the invention, as defined by the claims, overcomes the aforementioned problem in a totally satisfactory way, where the two aforementioned aspects are concerned, that is to say it makes it easy for the user to fill it in and guarantees that the opto-electronic reading systems can correctly read and interpret the contents.

To be specific, this is achieved because the characteristics of the form revolve around the fact that, for each one of the characters to be filled in by the user of the form, there is a second premark that serves as a supplement to the premark for the letter itself, and this second premark consists of three small signs arranged in the form of the three vertexes of an imaginary triangle, signs which can be the shape of small circles, small squares, a rhombus, a star, short straight strokes or similar, in such a way that the user of the form will use these three signs as a guide for the manual inscription concerned, joining two of them with a straight and oblique stroke to indicate an acute accent and a grave accent, with a horizontal and lower stroke to obtain the tilde for the " ñ", with two oblique strokes to form an inverted " V" to obtain a circumflex, and with two short horizontal strokes on the two lower signs to obtain a dieresis, it being clear that it is very easy for users to carry this out without making any errors, which likewise means that there is no consequent risk of the opto-electronic instruments making any subsequent errors in interpreting the signs.

It is clear that the three small signs that form the aforementioned triangle are not restrictive, because signs could also logically be arranged to match, for example, the middle point of each one of their sides. or any other arrangement or layout could be used that delimits the triangle enabling the user to make the handwritten stroke in the required direction, as is the case when dotted lines are used.

It is preferable that the aforementioned triangle be isosceles, as is common practise, but the layout will depend, on the one hand, on the size and shape of the premark above which it is located, in such a way that if the premark is narrow the triangle can be equilateral, or if each one of its parts is not perfectly symmetrical it could be a scalene triangle. The only condition is that it is parametrically in keeping with the first premark.

### DESCRIPTION OF THE DRAWINGS

With a view to supplementing the description that is being given and in order to help to give a greater understanding of the invention, a set of drawings is included as an essential part of a preferred embodiment of a practical realisation of this invention, which are intended to be illustrative but in no way exhaustive, and they show the following:
Figure 1.- Shows a practical realization of a conventional premark, that is to say, one which belongs to the technique that has been used in the past in forms for recording data that have to be read by an opto-electronic instrument.
Figure 2.- Shows in a representation similar to Figure 1, four potential ways of carrying out a practical realisation for the same premark, in accordance with the purpose of this invention.
Figure 3.- Shows, finally, examples of the premark in the preceding figure being put to practical use, so that a letter can be inserted in the premark to which different types of tildes can be added.

### REALISATION OF A PREFERRED EMBODIMENT OF THE INVENTION

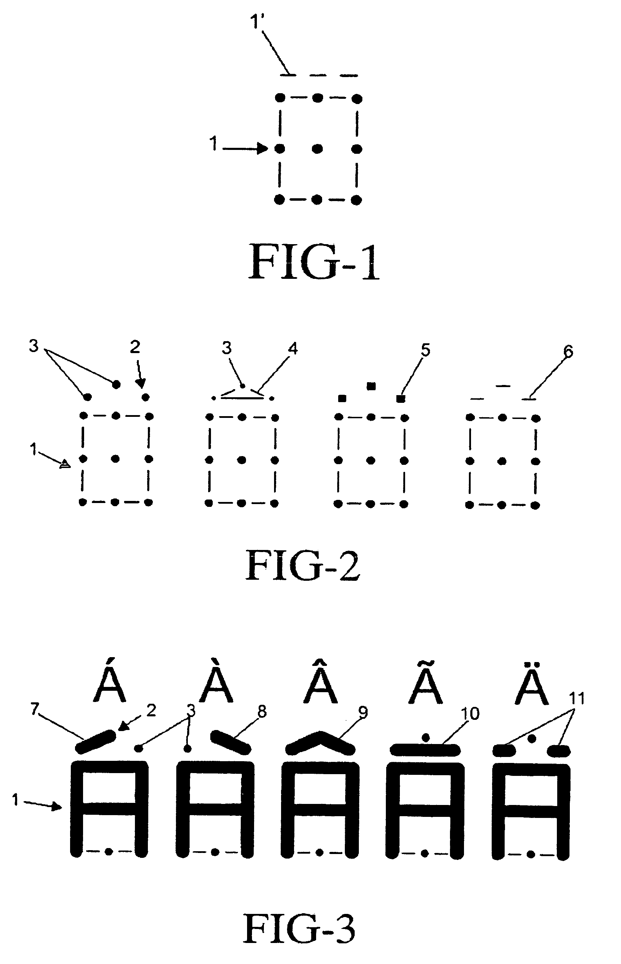

In view of the figures shown, and in particular Figure 1, it can be seen how premarks (1) are used on a conventional data recording form, these being rectangular, and based around a central point, four points that correspond to the vertexes and a further four points that correspond to the centre of each one of its sides, and these sides can either be or not be realised with unbroken strokes that join up the aforementioned points. There are premarks where the above-mentioned rectangle is not provided with those points and there are only unbroken strokes on its sides, on its diagonals and on the middle perpendiculars on its sides, which tends to make it easier to write the letters concerned on those premarks, there being a layout for the latter that also tends to be a rectangle where the perimeter is concerned, in such a way that the strokes of the premark (1) have been used as guidelines for the final strokes to be used by the person who is filling in the form.

In these conventional forms, a second premark (1') is put over the first premark (1), the latter being for the letter itself, and the second premark (1') is made up of three short strokes aligned horizontally, the purpose of which is to serve as a guideline for the different types of tilde that might be added to the letter itself.

It can clearly be seen that it is not only difficult to use this second premark (1') but it is also difficult to interpret it later when the user tries to use certain diacritic marks such as the tilde that is used to represent an " ñ" (with one single stroke that affects the three that make up the premark) or when trying to use a dieresis (by marking the two end signs and leaving the middle one free), but it is very difficult for the user to make the mark that is required for an acute accent or a grave accent, because there is no guideline for that purpose, and it is even more difficult to make a circumflex, which means that not only do the users make frequent errors, but there are also frequent errors in the subsequent interpretation process that is carried out by the opto-electronic reading equipment, especially where the interpretation of the circumflex is concerned.

In the form that is the subject of the invention, and by using the premarks (1) of any of the aforementioned conventional types, each one of the premarks (1) is accompanied by a second premark (2) that takes the form of three small signs (3), arranged as though they were the imaginary vertexes of an isosceles triangle that is rather flat, and these signs (3) can take the form of small isolated circles, as can be seen in the first realization in Figure 2, or circles that are almost dots where there are strokes (4) that do not reach them, as can be seen in the second realisation of that figure, but they could just as well take the form of small squares (5), short horizontal strokes (6) or any other graphic form that could obtain the same results with the same triangular arrangement.

As can be seen in Figure 3, it is feasible to use this special second premark (2) to quickly, easily and unequivocally realise an acute accent (7), a grave accent (8), a circumflex (9), a tilde (10) for the letter " ñ" or a dieresis (11), in accordance with the sequence shown in that figure.

In view of the fact that these strokes (7), (8), (9), (10) and (11) are straight lines and easy to identify because they look exactly the same as the conventional tildes that they represent, they are also easy to realise, without it being necessary for the users to have any special skill, and even the clumsiest users can mark them in exactly, which serves to ensure that the subsequent reading and interpretation process by the opto-electronic instruments that have received the data is carried out correctly.

## Claims

1. ^{st}.- A data recording form for opto-electronic reading, of the type used in systems such as multiple choice tests, examinations, medical reports, epidemiological tests and similar, which contains at least one part that has to be filled in by the users with their personal data, and which incorporates different premarks for the users to manually mark in, where each premark (1) is for the letter itself, **characterised by** a second premark (2) that takes the form of three small signs (3-5-6), arranged like the vertexes of an imaginary triangle, in such a way that these signs can be joined up by the users with strokes or straight lines (7-8-9-10-11) that are consistent with the position and shape of the different types of tildes that are used, that is to say, the acute and grave accents and the circumflex, the tilde to form the " ñ" and the dieresis.

2. ^{nd}.- A data recording form for opto-electronic reading, as in the 1st Claim, **characterised by** the fact that the way the signs (3-5-6) are arranged depends on the size and shape of the first premark (1), in such a way that they can form a rather flattened isosceles triangle, an equilateral triangle or a scalene triangle, each of which is invariably parametrically consistent with the premark (1).

3. ^{rd}. - A data recording form for opto-electronic reading, as in the 1st Claim, **characterised by** the fact that the aforementioned signs (3-5-6) for the second premark (2) can appear either as small circles, squares, rhombuses, stars or other similar shapes, capable of identifying at least the three vertexes of a triangle.

4. ^{th} - A data recording form for opto-electronic reading, as in the preceding claims, **characterised by** the fact that there are strokes (4) between the signs (3) for the second premark (2), which can either be unbroken or broken, which do not reach those signs (3).

## Patentansprüche

1. Ein optoelektronisch lesbares Datenerfassungsforinular der Art, wie es in Systemen wie Multiple-Choice-Tests, Prüfungen, Arztberichten, epiderniologischen Tests und Ähnlichem zum Einsatz kommt, das mindestens einen Teil aufweist, der von den Benutzern mit deren personenbezogeaten Daten ausgefüllt werden muss und verschiedene Vormarkierungen enthält, die von den Benutzern von Hand zu markieren sind, wobei jede Vormarkierung (1) für den Buchstaben selbst steht und durch eine zweite Vormarkierung (2) **gekennzeichnet** ist, die die Form von drei kleinen Zeichen annimmt (3-5-6), die wie die Vertexe eines imaginären Dreiecks angeordnet sind, so dass diese Zeichen vom Benutzer mit Strichen oder geraden Linien (7-8-9-10-11) verbunden werden können, die mit der Position und Form der verschiedenen verwendeten Zeichen wie Tilde, Akzent oder Trema übereinstimmen, das heißt, des Akut-, Gravis- und Zirkumflex-Akzents, der Tilde zur Bildung des " ñ " und des Tremas für die Umlaute.

2. Ein optoelektronisch lesbares Datenerfassungsformular wie im ersten Anspruch, durch den Umstand **gekennzeichnet**, dass die Art der Anordnung der Zeichen (3-5-6) von der Größe und Form der ersten Vormarkierung (1) abhängt, so dass sie ein ziemlich abgeflachtes gleichschenkeliges Dreieck, ein gleichseitiges Dreieck oder ein ungleiehseitiges Dreieck bilden, die jeweils ausnahmslos parametrisch mit der Vormarkierung (1) übereinstimmen.

3. Ein optoelektronisch lesbares Datenerfassungsformular wie im ersten Anspruch, durch den Umstand **gekennzeichnet**, dass die oben erwähnten Zeichen (3-5-6) für die zweite Vormarkierung (2) als kleine Kreise, Quadrate, Rhomben, Sterne oder in anderen ähnlichen Formeln auftreten können, die wenigstens zur Erkennung der drei Vertexe eines Dreiecks fähig sind.

4. Ein optoelektronisch lesbares Datenerfassungsformular wie in den vorigen Ansprüchen, durch den Umstand **gekennzeichnet**, dass sich zwischen den Zeichen (3) für die zweite Vormarkierung (2) Striche (4) befinden, die entweder gestrichelt oder ungestrichelt sein können und diese Zeichen (3) nicht erreichen.

## Revendications

1. Un formulaire d'enregistrement de données pour lecture optoélectronique, du type utilisé dans des systèmes tels que les tests à choix multiples, les examens, les rapports médicaux, les tests épidémiologiques et similaires, qui contient au moins une partie devant être remplie par les utilisateurs avec leurs renseignements personnels et qui incorpore différentes pré-marques pour que les utilisateurs les coche manuellement, où chaque pré-marque (1) est pour la lettre elle-même, **caractérisé par** une seconde pré-marque (2) qui prend la forme de trois petits signes (3-5-6) disposés comme les sommets d'un triangle imaginaire, de telle manière que ces signes peuvent être reliés par les utilisateurs avec des barres obliques ou des lignes droites (7-8-9-10-11) qui sont cohérentes avec la position et la forme des différents types de tildes qui sont utilisés, c'est-à-dire les accents aigus, graves et circonflexes, le tilde pour former le « ñ » et les trémas.

2. Un formulaire d'enregistrement de données pour lecture optoélectronique comme dans la revendication 1, **caractérisé par le fait que** la façon dont les signes (3-5-6) sont disposés dépend de la taille et de la forme de la première pré-marque (1), de telle sorte qu'ils peuvent former un triangle isocèle assez aplati, un triangle équilatéral ou un triangle scalène, chacun d'eux étant invariablement, paramètre par paramètre, homogène avec la pré-marque (1).

3. Un formulaire d'enregistrement de données pour lecture optoélectronique comme dans la revendication 1, **caractérisé par le fait que** les signes susmentionnés (3-5-6) pour la seconde pré-marque (2) peuvent apparaître comme de petits cercles, des carrés, des losanges, des étoiles ou d'autres formes similaires, capables d'identifier au moins les trois sommets d'un triangle.

4. Un formulaire d'enregistrement de données pour lecture optoélectronique comme dans les revendications précédentes, **caractérisé par le fait qu'**il y a des barres obliques (4) entre les signes (3) pour la seconde pré-marque (2), qui peuvent être ou non en pointillés, qui n'atteignent pas ces signes (3).
